# EUROPÄISCHE PATENTANMELDUNG

(11) **EP 4 390 153 A1**
(43) Veröffentlichungstag der Anmeldung: **26.06.2024**
(21) Anmeldenummer: 23214818.9
(22) Anmeldetag: 07.12.2023
(51) Int. Cl.: F16B 5/06

(54) **KLEMMVORRICHTUNG**

(30) Priorität: 19.12.2022 DE 102022213908
(71) Anmelder: Feldmann, Markus, 90443 Nürnberg (DE)
(72) Erfinder: Feldmann, Markus, 90443 Nürnberg (DE)
(74) Vertreter: Rau, Schneck & Hübner Patentanwälte Rechtsanwälte PartGmbB

(57) **Zusammenfassung**

Eine Klemmvorrichtung umfasst einen Tragkörper (3) mit einer Außennut (9), ein an dem Tragkörper (3) befestigtes Flächenelement (4) und eine Klemmleiste (5), mit der das Flächenelement (4) an dem Tragkörper (3) klemmend befestigt ist, wobei die Klemmleiste (5) in die Außennut (9) eingreift, wobei die Klemmleiste (5) mindestens ein Widerhakenelement (17) aufweist zum Hintergreifen mindestens eines Haltestegs (12) in der Außennut (9).

## Beschreibung

Der Inhalt der deutschen Patentanmeldung DE 10 2022 213 908.9 wird durch Bezugnahme hierin aufgenommen.

Die Erfindung betrifft eine Klemmvorrichtung.

Eine Folie kann im Rahmen befestigt werden, indem die Folie zwischen zwei Rahmenelementen gehalten wird. Die Rahmenelemente sind beispielsweise miteinander verschraubt oder geklebt. Insbesondere, wenn die Folienbefestigung hohen Dichtheitsanforderungen genügen muss, ist der Herstellungsaufwand für die Befestigung groß. Es besteht ein Risiko, dass die Folienbefestigung undicht ist.

Es ist die Aufgabe der vorliegenden Erfindung, eine Befestigungsmöglichkeit bereitzustellen, die unkompliziert und zuverlässig, insbesondere gas- und/oder flüssigkeitsdicht ist.

Diese Aufgabe ist erfindungsgemäß gelöst durch eine Klemmvorrichtung mit den im Anspruch 1 angegebenen Merkmalen.

Der Kern der Erfindung besteht darin, dass ein, insbesondere biegeschlaffes, flexibles und/oder elastisches, Flächenelement, an einem Tragkörper mittels einer Klemmleiste klemmend befestigt ist. Es wurde erkannt, dass die Klemmleiste in einer Außennut des Tragkörpers eine zuverlässige, insbesondere abdichtende, Klemm-Befestigung des Flächenelements gewährleistet. Die Klemmleiste greift in die Außennut des Tragkörpers ein und ist insbesondere vollständig innerhalb der Außennut angeordnet. Die Klemmleiste ist bezüglich einer Oberfläche des Tragkörpers, an der die Außennut angeordnet ist, insbesondere bündig oder zurückversetzt angeordnet.

Die Herstellung der Einzelteile der Klemmvorrichtung ist unkompliziert und kosteneffizient. Die Montage der Klemmvorrichtung ist unkompliziert und fehlersicher. Das Flächenelement ist beispielsweise als Textil oder Folie ausgeführt. Das Flächenelement ist insbesondere dünnwandig ausgeführt, insbesondere mit einer Dicke von 0,3 mm bis 1,0 mm und insbesondere von 0,4 mm bis 0,8 mm.

Die Folie ist insbesondere eine Kunststofffolie. Die Folie ist insbesondere weichelastisch ausgeführt und insbesondere gummiartig. Die Kunststofffolie ist beispielsweise aus thermoplastischem Polyurethan (TPU) und/oder aus einem Silikonmaterial hergestellt. Die Folie kann eine Membranfolie sein und mindestens eine Durchtrittsöffnung aufweisen, insbesondere mehrere Durchtrittsöffnungen, die groß genug ist, um Luft gezielt abzugeben, die aber auch klein genug ist, um einen Eintritt von Wasser in eine Belüftungsvorrichtung zu vermeiden. Die Durchtrittsöffnungen können bezüglich Form und/oder Größe und insbesondere in Abhängigkeit des Einsatzzwecks der Kunststofffolie festgelegt werden. Eine Außenkontur der Durchtrittsöffnungen kann sternförmig, schlitzförmig oder kreis- oder punktartig ausgeführt sein. Eine lichte Weite der Durchtrittsöffnungen kann zwischen 0,5 mm und 2 mm betragen.

Eine Folie kann insbesondere auch eine transparente Kunststofffolie sein, die beispielsweise als Notverglasung dienen kann. Eine derartige Notverglasung dient zum temporären Ersetzen einer Fensterglasfläche, insbesondere für den Zeitraum einer Reparatur oder einer Ersatzbeschaffung. Die Notverglasung kann schnell und unkompliziert und insbesondere vor Ort hergestellt werden. Die für die Erstellung der Notverglasung erforderlichen Komponenten können separat transportiert und vor Ort montiert werden. Der Transportaufwand für die Einzelteile ist gering. Insbesondere für die Erstellung einer Notverglasung von großflächigen Schaufenstern ist der Transportaufwand von großflächigen Flächenelementen vermieden.

Der Tragkörper kann leistenartig oder plattenartig ausgeführt sein. Die Außennut erstreckt sich insbesondere entlang einer Längsachse des Tragkörpers. Der Tragkörper weist zwei, insbesondere identisch ausgeführte, Außennuten auf, die insbesondere an gegenüberliegend angeordneten Seitenflächen ausgebildet sind.

Die plattenartige Ausführung ergibt sich insbesondere dadurch, dass der Tragkörper eine Grundfläche mit einer Längenausdehnung und einer Breitenausdehnung aufweist, die insbesondere größer sind als eine Dickenausdehnung des Tragkörpers. Insbesondere betragen Längenausdehnung und/oder Breitenausdehnung mindestens das 5-fache der Dickenausdehnung, insbesondere mindestens das 10-fache, insbesondere mindestens das 20-fache, insbesondere mindestens das 50-fache und insbesondere mindestens das 100-fache. Die Grundfläche des Tragelements ist insbesondere viereckig und insbesondere rechteckig. Der Tragkörper kann aus Kunststoff hergestellt sein. Der Tragkörper ist insbesondere leichtbauend und kosteneffizient herstellbar. Der Tragkörper kann auch aus einem Metallwerkstoff, insbesondere aus Stahl, aus Glas, Holz oder Stein hergestellt sein.

Der Tragkörper kann insbesondere vorteilhaft aus einem Kunststoffmaterial, insbesondere durch Strangpressen hergestellt werden. Der Tragkörper ist insbesondere hohlprofilförmig ausgeführt. Der Tragkörper ist materialsparend und leichtbauend konstruiert. Der Tragkörper weist insbesondere in einer Ebene senkrecht zu seiner Längsachse eine fachwerkartige und/oder Hohlkammer-Struktur auf. Der Tragkörper weist eine hohe Steifigkeit auf.

Die Klemmleiste ist insbesondere formstabil ausgeführt. Das bedeutet, dass die Geometrie der Klemmleiste infolge ihres Eigengewichts erhalten bleibt. Die Klemmleiste ist insbesondere aus einem harten und festen Material hergestellt. Die Klemmleiste garantiert insbesondere eine linienförmige und/oder flächenhafte Klemmung des Flächenelements an dem Tragkörper. Die mittels der Klemmleiste erzielte Klemmung ist zuverlässig und insbesondere fluiddicht und insbesondere gasdicht. Die Klemmleiste weist eine Härte von mindestens 30 Shore D, insbesondere von mindestens 40 Shore D, insbesondere von mindestens 45 Shore D, insbesondere von mindestens 50 Shore D, insbesondere von mindestens 60 Shore D und insbesondere von mindestens 70 Shore D. Insbesondere ist die Klemmleiste aus einem Kunststoffmaterial hergestellt wie beispielsweise Polyethylen (PE), Polyvinylchlorid (PVC) und/oder Acrylnitril-Butadien-Styrol (ABS). Die Klemmleiste ist insbesondere einteilig hergestellt. Die Klemmleiste weist insbesondere in einer Ebene senkrecht zur Leistenlängsachse einen offenen Profilquerschnitt auf. Die Klemmleiste ist ein Klemmprofil.

Die Klemmleiste kann zuverlässig und stabil klemmend in der Außennut des Tragkörpers angeordnet werden und garantiert eine stabile und abdichtende Anordnung des Flächenelements.

Insbesondere sind eine Innenkontur der Außennut und eine Außenkontur der Klemmleiste derart aufeinander abgestimmt, dass eine maximale Spaltbreite resultiert, die kleiner oder gleich der Wandstärke des Flächenelements ist. Insbesondere beträgt die Spaltbreite mindestens 80 % der Wandstärke des Flächenelements, insbesondere mindestens 85 % der Wandstärke, insbesondere mindestens 90 % der Wandstärke, insbesondere mindestens 92 % der Wandstärke und insbesondere mindestens 95 % der Wandstärke.

Bei der Klemmvorrichtung weist die Klemmleiste mindestens ein Widerhakenelement, insbesondere mehrere Widerhakenelemente auf, das zum Hintergreifen mindestens eines Haltestegs dient. Die Klemmvorrichtung gewährleistet eine erhöhte Sicherheit gegen unbeabsichtigtes Lösen der Klemmleiste vom Tragkörper. Die Klemmleiste ist selbstsichernd in der Außennut des Tragkörpers angeordnet. Insbesondere weist die Klemmleiste zwei Widerhakenelemente auf, die jeweils zum unmittelbaren Zusammenwirken mit dem mindestens einen Haltesteg ausgeführt sind. Die Widerhakenelemente sind gegenüber der Nuttiefenrichtung als geneigt angeordnete Lamellen ausgeführt. Der Neigungswinkel beträgt insbesondere mindestens 10°, insbesondere mindestens 20°, insbesondere mindestens 30° und insbesondere mindestens 15°. Die Widerhakenelemente sind flexibel ausgeführt und ermöglichen ein Einführen der Klemmleiste in die Außennut, insbesondere durch die von den Haltestegen gebildete Engstelle. Nach Passieren der Engstelle nehmen die Widerhakenelemente ihre ursprüngliche unbelastete Geometrie ein und verhaken an den Haltestegen, insbesondere durch Hintergreifen. Die Widerhakenelemente bilden insbesondere eine pfeilförmige Kontur.

Es können auch mehr als zwei Widerhakenelemente vorhanden sein.

Der Neigungswinkel der Widerhakenelemente beträgt insbesondere höchstens 90°, insbesondere höchstens 85°, insbesondere höchstens 75° und insbesondere höchstens 60°.

Insbesondere ist das mindestens eine Widerhakenelement einteilig an einem Verbindungssteg der Klemmleiste angeformt. Insbesondere erstreckt sich das mindestens eine Widerhakenelement von dem Verbindungssteg mit dem Neigungswinkel geneigt in rückwärtiger Richtung, also in Richtung der Öffnung der Außennut. Das mindestens eine Widerhakenelement hintergreift den mindestens einen Haltesteg. Bei einem Entfernen der Klemmleiste aus der Außennut verhakt die Klemmleiste mit dem mindestens einen Widerhakenelement in der Außennut an dem Haltesteg.

Eine Klemmvorrichtung gemäß Anspruch 2 vereinfacht die Zugänglichkeit der Außennut und die Montage der Klemmvorrichtung. Eine Seitenfläche des Tragkörpers erstreckt sich insbesondere im Wesentlichen und insbesondere entlang einer Höhe des Tragkörpers. Die Seitenfläche erstreckt sich insbesondere quer und insbesondere senkrecht zu einer Unterseite des Tragkörpers, wobei der Tragkörper mit der Unterseite auf einer Unterlage, beispielsweise einem Boden, aufliegen kann.

Eine Klemmvorrichtung gemäß Anspruch 3 erhöht die Sicherheit der klemmenden Anordnung der Klemmleiste in der Außennut. Mindestens ein Haltesteg bildet ein Rückhalteelement für die in der Außennut angeordnete Klemmleiste. Der Haltesteg weist eine Anlageschulter auf, an der die Klemmleiste anliegen kann. Insbesondere sind genau zwei Haltestege vorhanden, die gegenüberliegend an Nutflanken der Außennut angeordnet sind.

Eine Klemmvorrichtung gemäß Anspruch 4 vereinfacht die Montage der Klemmvorrichtung. Dadurch, dass die Klemmleiste dünnwandig ausgeführt ist, weist sie eine verbesserte Strukturflexibilität auf. Die Montage der Klemmvorrichtung, insbesondere das Einführen der Klemmleiste in die Außennut, insbesondere ein Eindrücken in Richtung der Nuttiefe, ist vereinfacht. Die Wandstärke der Klemmleiste ist insbesondere klein bezogen auf die Länge und/oder Breite der Klemmleiste. Insbesondere beträgt das Verhältnis von Wandstärke zur Breite der Klemmleiste höchstens 0,25, insbesondere höchstens 0,2, insbesondere höchstens 0,15 und insbesondere höchstens 0,1.

Die Herstellung der Klemmleiste ist mit reduziertem Materialaufwand möglich. Die Klemmleiste ist ressourcenschonend und nachhaltig.

Eine Klemmvorrichtung gemäß Anspruch 5 verbessert die abdichtende Anordnung des Flächenelements am Tragkörper. Ein Abschlusssteg der Klemmleiste ist insbesondere quer und insbesondere senkrecht bezüglich der Nuttiefenrichtung orientiert. Der Abschlusssteg erstreckt sich insbesondere über die lichte Weite der Außennut im Bereich der Nutöffnung. Mit dem Abschlusssteg ist das Flächenelement insbesondere in Längsrichtung und/oder oder in Breitenrichtung der Außennut abgedichtet angeordnet. Es ist zusätzlich denkbar, dass ein Abstand zwischen dem mindestens einen Widerhakenelement und dem Abschlusssteg in Tiefenrichtung derart festgelegt ist, dass das Flächenelement auch in Nuttiefenrichtung, insbesondere an einer Rundöffnung zugewandte Außenseite der Haltestege geklemmt ist. Insbesondere ist das Flächenelement in Breitenrichtung der Außennut geklemmt und abgedichtet angeordnet.

Eine Klemmleiste gemäß Anspruch 6 ermöglicht eine erhöhte Flexibilität bei der Gestaltung des Profilquerschnitts. Die Klemmleiste kann derart ausgestaltet sein, dass das Einführen der Klemmleiste in die Außennut vereinfacht und die Rückhaltung der Klemmleiste in der Außennut verbessert ist.

Sowohl die in den Patentansprüchen angegebenen Merkmale als auch die in dem nachfolgenden Ausführungsbeispiel einer erfindungsgemäßen Klemmvorrichtung angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstandes keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigt:

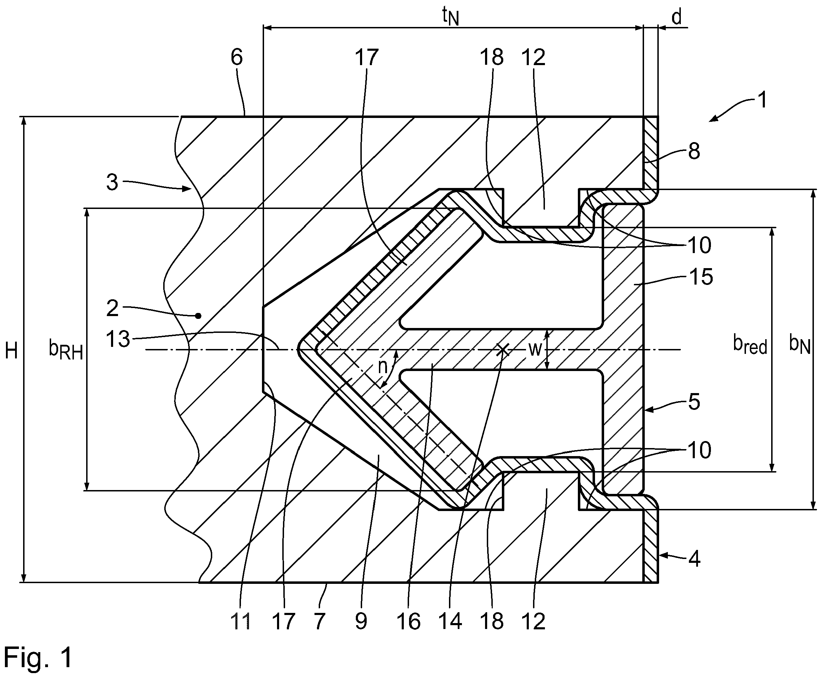

- Fig. 1: eine vergrößerte Schnittansicht einer erfindungsgemäßen Klemmvorrichtung in einer Ebene senkrecht zu einer Längsachse.

Eine in Fig. 1 insgesamt mit 1 gekennzeichnete Klemmvorrichtung umfasst einen eine Längsachse 2 aufweisenden Tragkörper 3, ein biegeschlaffes Flächenelement 4 sowie eine Klemmleiste 5, mit der das Flächenelement 4 an dem Tragkörper 3 klemmend befestigt ist. Die Längsachse 2 ist senkrecht zur Zeichenebene orientiert.

Der Tragkörper 3 ist als Leiste oder Platte ausgeführt, insbesondere aus einem Kunststoffmaterial. Der Tragkörper 3 weist eine senkrecht zur Längsachse 2 orientierte Querschnittsfläche auf, die im Wesentlichen rechteckig ausgeführt ist. Der Tragkörper weist eine Oberseite 6 und eine gegenüberliegend angeordnete, insbesondere parallel zur Oberseite 6 orientierte Unterseite 7 auf. Die Oberseite 6 und die Unterseite 7 sind durch seitliche Seitenflächen 8 miteinander verbunden, wobei aus Darstellungsgründen in Fig. 1 lediglich eine Seitenfläche 8 dargestellt ist.

Der Tragkörper 3 weist eine Länge auf, die entlang der Längsachse 2 orientiert ist. Der Tragkörper 3 weist eine Breite auf, die senkrecht zur Längsachse 2 und parallel zur Oberseite 6 und/oder Unterseite 7 orientiert ist. Der Tragkörper 3 weist eine Höhe H auf, die insbesondere den senkrechten Abstand zwischen der Oberseite 6 und der Unterseite 7 definiert. Die Höhenrichtung ist senkrecht zur Längenrichtung und zur Breitenrichtung orientiert. Insbesondere gilt, dass die Höhe H kleiner ist als die Breite und kleiner ist als die Länge.

An der Seitenfläche 8 des Tragkörpers 3 ist eine Außennut 9 angeordnet. Die Außennut 9 ist zu der Seitenfläche 8 hin geöffnet und erstreckt sich entlang der Breitenrichtung in den Tragkörper 3 hinein. Die Außennut 9 erstreckt sich insbesondere auch entlang der Längsrichtung, also parallel zur Längsachse 2, insbesondere über die gesamte Länge des Tragkörpers 3. Die Außennut 9 ist in Längsrichtung insbesondere durchgängig ausgeführt. Die Außennut 9 weist zwei gegenüberliegend angeordnete Nutflanken 10 auf, die eine Nutbreite b_{N} definieren. Die Nutbreite b_{N} ist durch den senkrechten Abstand der gegenüberliegenden Nutflanken 10 definiert. Die Außennut 9 weist ferner einen Nutgrund 11 auf. Ein senkrechter Abstand vom Nutgrund 11 zur Seitenfläche 8 definiert eine Nuttiefe trr.

Die Außennut 9 weist eine Nutmittelachse 13 auf. Die Innenkontur der Außennut 9 ist spiegelsymmetrisch bezüglich der Nutmittelachse 13 ausgeführt. Die Nutmittelachse 13 erstreckt sich entlang der Tiefenrichtung der Außennut 9.

Die Außennut 9 weist an den Nutflanken 10 jeweils einen vorspringenden Haltesteg 12 auf. Die Haltestege 12 haben eine rechteckförmige Kontur und springen in die Außennut 9 vor. Die Haltestege 12 sind gegenüber der Seitenfläche 8 in der Außennut 9 zurückversetzt angeordnet. Die Haltestege 12 sind insbesondere identisch ausgeführt.

Die Haltestege 12 sind bezüglich der Nutmittelachse 13 einander gegenüberliegend und spiegelsymmetrisch zueinander angeordnet. Die Außennut 9 weist im Bereich der Haltestege 12 eine reduzierte Nutbreite b_{red} auf.

Die Klemmleiste 5 ist, insbesondere vollständig, innerhalb der Außennut 9 angeordnet. Insbesondere ist die Klemmleiste 5 oberflächenbündig bezüglich der Seitenfläche 8 in der Außennut 9 angeordnet. Die Klemmleiste 5 ist als Klemmprofil ausgeführt und weist eine senkrecht zur Bildebene orientierte Leistenlängsachse 14 auf. Die Leistenlängsachse 14 ist insbesondere parallel zur Längsachse 2 orientiert. Die Klemmleiste 5 weist in der Ebene senkrecht zur Leistenlängsachse 14 eine offene Profilgeometrie auf. Die Profilgeometrie ist dünnwandig ausgeführt mit einer Wandstärke w, die insbesondere klein ist bezogen auf die Länge der Klemmleiste 5 entlang der Leistenlängsachse 14. Die Länge der Klemmleiste 5 ist im Wesentlich identisch und insbesondere identisch mit der Länge des Tragkörpers 3.

Die Klemmleiste 5 ist einteilig ausgeführt. Aufgrund der dünnwandigen Ausführung weist die Klemmleiste 5 eine Strukturflexibilität auf.

Die Klemmleiste 5 weist einen außenliegenden Abschlusssteg 15 auf, mit dem die Folie 4 in Höhenrichtung des Tragkörpers 3 an den Nutflanken 10 der Außennut 9 und insbesondere entlang der Länge der Klemmleiste 5 klemmend gehalten ist. Insbesondere ist die Breite des Abschlusssteges 15 in Nutbreitenrichtung so gewählt, dass ein resultierender Spalt zwischen der Klemmleiste 5 und der Außennut 9 kleiner ist als die Foliendicke d.

Die Klemmleiste 5 ist insbesondere vollständig innerhalb der Außennut 9 angeordnet. Das bedeutet, dass der Abschlusssteg 15 gegenüber der Seitenfläche 8 nicht vorsteht, also insbesondere in die Außennut 9 zurückversetzt oder oberflächenbündig mit der Seitenfläche 8 angeordnet ist.

Gemäß einem nicht gezeigten Ausführungsbeispiel kann die Klemmleiste 5 mit dem Abschlusssteg 15 aber auch gegenüber der Seitenfläche 8 vorstehen, also aus der Außennut 9 hervorragen. Insbesondere kann der Abschlusssteg 15 einen, insbesondere beidseitig, radial bezüglich der Leistenachse 14 vorstehenden Stirnflächenbund aufweisen. Der Stirnflächenbund ist insbesondere außerhalb der Außennut 9 angeordnet und dient zum stirnseitigen Andrücken, insbesondere Klemmen, des Flächenelements 4 an der Seitenfläche 8. Die auf das Flächenelement 4 ausgeübte Haltekraft ist dadurch zusätzlich erhöht.

Die Klemmleiste 5 weist einen Verbindungssteg 16 auf, der sich ausgehend von dem Abschlusssteg 15 senkrecht erstreckt und der montierten Anordnung der Klemmleiste 5 insbesondere parallel und konzentrisch zur Nutmittelachse 13 orientiert ist. Der Verbindungssteg 16 verbindet den Abschlusssteg 15 mit zwei Widerhakenelementen 17, die unter einem Neigungswinkel n an dem Verbindungssteg 16 angeformt sind. Die Widerhakenelemente 17 erstrecken sich in einer rückwärtigen Richtung, im Wesentlichen zu der Seitenfläche 8 hin orientiert. Die Widerhakenelemente 17 definieren eine Rückhaltebreite b_{RH}, die insbesondere größer ist als die reduzierte Nutbreite b_{red} im Bereich der Haltestege 12. Insbesondere ist die Rückhaltebreite b_{RH} kleiner als die Nutbreite b_{N}. Insbesondere ist die Rückhaltebreite b_{RH} so ausgelegt, dass der Spalt zwischen der Klemmleiste 5 im Bereich der Widerhakenelemente 17, insbesondere in Breitenrichtung der Klemmleiste 5 kleiner ist als die Foliendicke d.

Aufgrund der Strukturflexibilität der Klemmleiste 5 und insbesondere der Widerhakenelemente 17 kann die Klemmleiste 5 in die Außennut 9 derart eingeführt werden, dass die Widerhakenelemente 17 beim Durchführen durch die gegenüberliegenden Haltestege 12 vorübergehend zu dem Verbindungssteg 16 hingedrückt werden, insbesondere aufgrund der Strukturflexibilität. Wenn die Klemmleiste 5 derart tief in die Außennut 9 eingeführt ist, dass die Widerhakenelemente 17 an den Haltestegen 12 vorbeigeführt sind und frei liegen, können diese, insbesondere aufgrund ihrer Elastizität, wieder in ihre Ausgangsposition zurückverlagert werden. Die Widerhakenelemente 17 verhindern ein unbeabsichtigtes Herausziehen der Klemmleiste 5 aus der Außennut 9, insbesondere indem die Widerhakenelemente 17 an einer rückwärtigen Anlageschulter 18 des jeweiligen Haltestegs 12 anliegen.

Gemäß dem gezeigten Ausführungsbeispiel erfolgt eine Klemmung der Folie 4 zumindest im Bereich der äußeren Nutflanken 10 durch den Abschlusssteg 15 in Breitenrichtung der Außennut 9 sowie durch die Widerhakenelemente 17 an inneren Abschnitten der Nutflanken 10, insbesondere hinter den Haltestegen 12, in Breitenrichtung der Außennut 9.

Es ist möglich, die Länge des Verbindungsstegs 16 entlang der Nutmittelachse 13 derart anzupassen, dass die Widerhakenelemente 17 im montierten Zustand an den Anlageschultern 18 dauerhaft anliegen. Es ist darüber hinaus oder alternativ möglich, die Länge des Verbindungssteges 16 derart anzupassen, dass die Klemmleiste 5 mit dem Abschlusssteg 15 die Folie 4 an die Haltestege 12 unmittelbar andrückt.

Es ist insbesondere auch denkbar, die Länge des Verbindungssteges 16 derart auszuführen, dass die Klemmleiste 5 im montierten Zustand in Nuttiefenrichtung gestaucht wird und insbesondere die Folie 4 von der Klemmleiste 5 gegen den Nutgrund 11 angedrückt wird.

Die Folie 4 ist insbesondere aus einem elastischen und deformierbaren Material, insbesondere aus einem Kunststoffmaterial hergestellt, insbesondere aus TPU oder einem Silikonmaterial.

Die Folie 4 ist in der Außennut 9 mittels der Klemmleiste 5 zuverlässig und dicht gehalten.

## Patentansprüche

1. Klemmvorrichtung umfassend
a. einen Tragkörper (3) mit einer Außennut (9),
b. ein an dem Tragkörper (3) befestigtes Flächenelement (4),
c. eine Klemmleiste (5), mit der das Flächenelement (4) an dem Tragkörper (3) klemmend befestigt ist, wobei die Klemmleiste (5) in die Außennut (9) eingreift,
**dadurch gekennzeichnet, dass** die Klemmleiste (5) mindestens ein Widerhakenelement (17) aufweist zum Hintergreifen mindestens eines Haltestegs (12) in der Außennut (9).

2. Klemmvorrichtung gemäß Anspruch 1, **dadurch gekennzeichnet, dass** die Außennut (9) an einer Seitenfläche (8) des Tragkörpers (3) ausgebildet ist.

3. Klemmvorrichtung gemäß einem der vorstehenden Ansprüche, **gekennzeichnet durch** mindestens einen in die Außennut (9) vorspringenden Haltesteg (12) zum Halten der Klemmleiste (5) in der Außennut (9).

4. Klemmvorrichtung gemäß einem der vorstehenden Ansprüche,
**dadurch gekennzeichnet, dass** die Klemmleiste (5) dünnwandig ausgeführt ist.

5. Klemmvorrichtung gemäß einem der vorstehenden Ansprüche,
**dadurch gekennzeichnet, dass** die Klemmleiste (5) einen Abschlusssteg (15) aufweist, mit dem die Klemmleiste (5) im montierten Zustand die Außennut (9) abdichtend abschließt.

6. Klemmvorrichtung gemäß einem der vorstehenden Ansprüche,
**dadurch gekennzeichnet, dass** die Klemmleiste (5) als Profilelement ausgeführt ist mit einem, insbesondere offenen, Profilquerschnitt.
